# EUROPEAN PATENT APPLICATION

(11) **EP 1 741 921 A1**
(43) Date of publication of application: **10.01.2007**
(21) Application number: 06013737.9
(22) Date of filing: 03.07.2006
(51) Int. Cl.: F02M 51/06, F02M 61/16

(54) **Fuel injection valve**

(30) Priority: 04.07.2005 JP 2005195243
(71) Applicant: HITACHI, LTD., Chiyoda-ku Tokyo 100-8280 (JP)
(72) Inventor: Mifuji, Masanori, c/o Hitachi Ltd., Chiyoda-ku Tokyo 100-8220 (JP); Maekawa, Noriyuki, c/o Hitachi Ltd., Chiyoda-ku Tokyo 100-8220 (JP); Ishikawa, Tohrui, c/o Hitachi Ltd., Chiyoda-ku Tokyo 100-8220 (JP)
(74) Representative: Beetz & Partner

(57) **Abstract**

The invention relates to a fuel injection valve comprising a valve seat (31) being provided upstream from a fuel nozzle orifice (32). A first valve rod (2) opens and closes the fuel nozzle orifice (32) with axial movements relative to the valve seat (31). A spring (4) exerts the first valve rod (2) away from the valve seat (31). A stopper (6) restricts a lift amount of the first valve rod (2) lifted with a force of the spring (4). A solenoid produces a magnetic field. A magnetostrictive element (9) extends when current passes through the solenoid and shrinks when no current passes through said solenoid, and having a hysteresis in an axial deformation amount on extending and in an axial deformation amount on shrinking. A second valve rod (8) presses the first valve rod (2) onto the valve seat (31) against the force of the spring (4) when the solenoid is not energized, and allows the first valve rod (2) to move away from the valve seat (31) with exertions of an extension of the magnetostrictive element (9) and the force of said spring (4) when said solenoid is energized. Wherein the extension amount of the magnetostrictive element (9) when the first valve rod (2) is fully open is set greater than a full stroke of the first valve rod (2) from the valve seat (31) to stopper (6).

## Description

### FIELD OF THE INVENTION

The present invention relates to a fuel injection valve used for an internal combustion engine, especially, to a fuel injection valve using a magnetostrictive element as an actuator of the injection valve.

### BACKGROUND OF THE INVENTION

Fuel injection valves used for internal combustion engines of using a magnetostrictive element as an actuator for the injection valve, have been suggested. For example, in a fuel injector disclosed in Japanese Patent Application Laid-Open JP-A No. 2001-234830, a pilot valve is used as the actuator, and a magnetostrictive element is used for controlling pressure oil of driving the valve rod. In this related technique, the following structure has been suggested. The magnetostrictive element comprises plural magnetostrictive rods (a first magnetostrictive rod and a second magnetostrictive rod). The magnetostrictive rods are arranged in parallel to each other (tandem arrangement), and coupled to each other via a coupling member. A fuel injection nozzle disclosed in this prior art controls an injection rate pattern variably in a wide range from the low injection pressure to high injection pressure. The magnetostrictive element is disposed in parallel to an axis of the pilot valve. A lift amount of the pilot valve is determined by the sum of extension (deformation) amounts of the first and second magnetostrictive rods, so that the lift amount can be increased.

In Japanese Patent Application Laid-Open JP-A No. 2000-262076, a super magnetostrictive actuator is used as a driving device of a fuel injection valve. This actuator uses at least two super magnetostrictive members in combination with each other. In this fuel injection valve, a first and second magnetostrictive members disposed coaxially are coupled to each other via a coupling member. Both magnetostrictive members are coupled to each other to generate an extension corresponding to the sum of extension amounts of both magnetostrictive members when a magnetic field is produced. The lift amount of the valve rod is determined by this extension.

In a fuel injection valve operated high-responsively by use of a magnetostrictive element, a wide range of a flow rate (maximum flow rate, minimum flow rate) needs to be controlled accurately. Therefore, it is very important to determine a lift amount of an injection nozzle valve rod of the fuel injection valve, to increase the lift amount, and to decrease variations of the lift amount.

The fuel injection valve with the magnetostrictive element as the actuator has the following unevennesses per product: unevenness of magnetostrictive amount, unevenness of positional adjustment between the valve rod and magnetostrictive element, and unevenness due to the thermal expansion with variations in temperature. The lift amount of the valve rod varies due to such evennesses, so that unevenesses of the flow rates of the fuel injection valves are responsible very large.

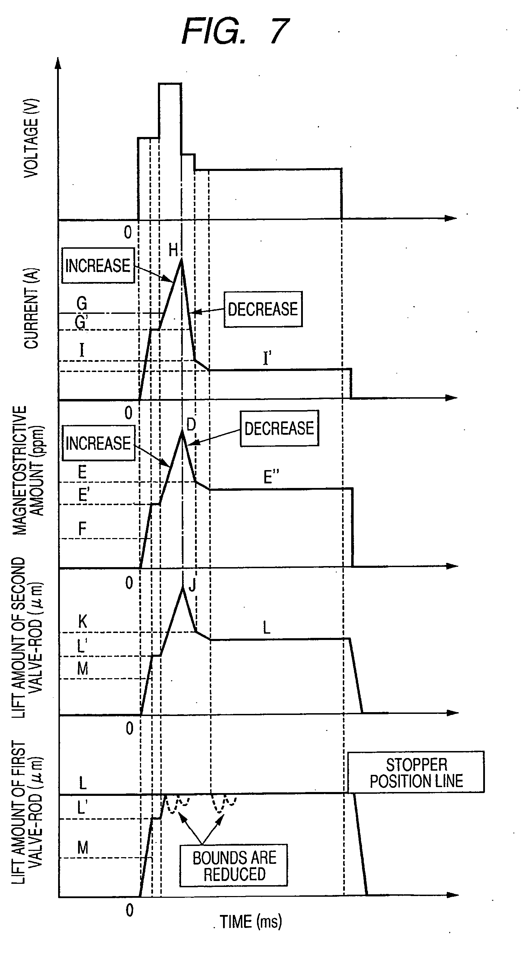

Recently, as an engine aiming for high fuel-efficiency and high power, in-cylinder direct injection type gasoline engines (hereinafter called direct injection engines) are in practical use. As the direct injection engine, there are an engine having a fuel injection valve disposed to a side surface of a combustion chamber of the engine as shown in FIG. 7A, an engine having a fuel injection valve disposed just above a combustion chamber of the engine as shown in FIG. 7B, and the like. In the direct injection engines shown in FIGs. 7A and 7B, a suitable form of fuel injection and an optimum flow rate are required in accordance with the combustion method, a shape of the combustion chamber, a scale of the combustion chamber, and the like.

On the other hand, in the direct injection engine, the time from the fuel injection to the ignition is short, and the time until the fuel injected to the inside of the cylinder is vaporized is short. Therefore, to encourage the vaporization of fuel, the fuel needs to be atomized. The form of the fuel injection, the atomization of fuel, and the optimum flow rate influence concerning an amount of unburned-fuel components in the engine exhaust (hereinafter called HC), an amount of nitrogen oxides (hereinafter called NOₓ), and fuel efficiency.

### SUMMARY OF THE INVENTION

An object of the present invention is to provide a fuel injection valve using a magnetostrictive element, in which an optimum fuel flow rate can be obtained by opening and closing an injection nozzle orifice more accurately.

The fuel injection valve of the present invention is basically structured as follows.

The fuel injection valve may comprise: a fuel nozzle orifice; a valve seat provided upstream from the fuel nozzle orifice; a first valve rod for opening and closing the fuel nozzle orifice with axial movements relative to the valve seat; a spring for exerting the first valve rod away from the valve seat; the stopper for restricting a lift amount of the first valve rod lifted with a force of said spring; a solenoid for producing a magnetic field; a magnetostrictive element of extending when current passes through the solenoid and of shrinking when no current passes through the solenoid, and having a hysteresis in an axial deformation amount on extending and in an axial deformation amount on shrinking; and/or a second valve rod for pressing the first valve rod onto the valve seat against the force of the spring when the solenoid is not energized, and for allowing the first valve rod to move away from the valve seat with exertions of an extension of the magnetostrictive element and the force of the spring when the solenoid is energized. The extension amount of the magnetostrictive element when the first valve rod is fully open is set greater than a full stroke of the first valve rod from the valve seat to the stopper.

The above features can be combined in any way partly or as a whole.

### BRIEF DESCRIPTION OF THE DRAWINGS

FIG. 1 is a cross sectional view showing a structure of a first embodiment of a fuel injection valve of the present invention;
FIGs 2-3 are partial enlarged view of FIG. 1;
FIG. 4 is a graph showing a hysteresis characteristic of the fuel injection valve shown in FIG. 1;
FIG. 5 is a chart of a hysteresis characteristic of the fuel injection valve shown in FIG. 2;
FIG. 6 is a graph showing a hysteresis characteristic of the fuel injection valve of a second embodiment of the fuel injection valve of the present invention;
FIG. 7 is a chart of the hysteresis characteristic of the fuel injection valve shown in FIG. 4;
FIG. 8 is a cross sectional view showing a structure of a third embodiment of the fuel injection valve of the present invention; and

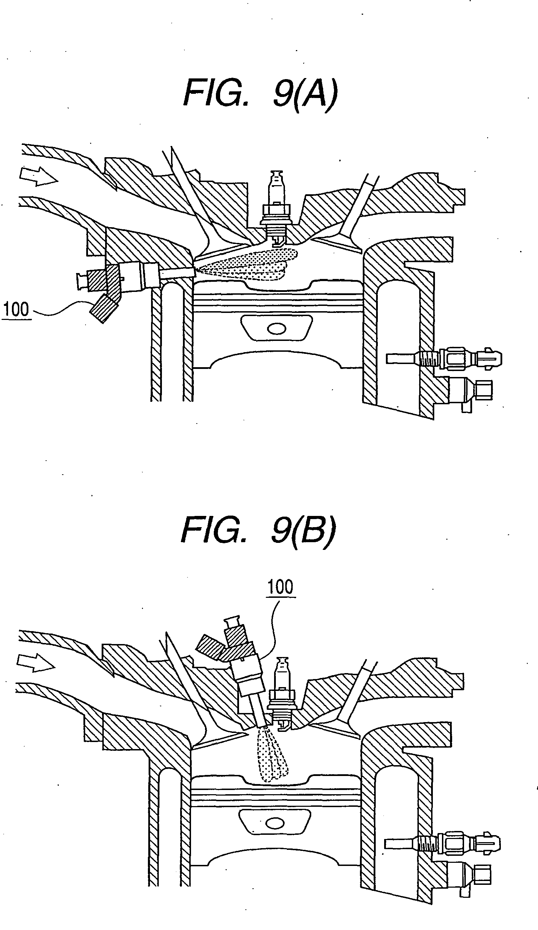

FIGs. 9A, 9B are diagrams showing examples in which the fuel injection valve is mounted to a cylinder fuel injection internal combustion engine.

### DETAILED DESCRIPTION OF THE PREFERRED EMBODIMENTS

### [Embodiment 1]

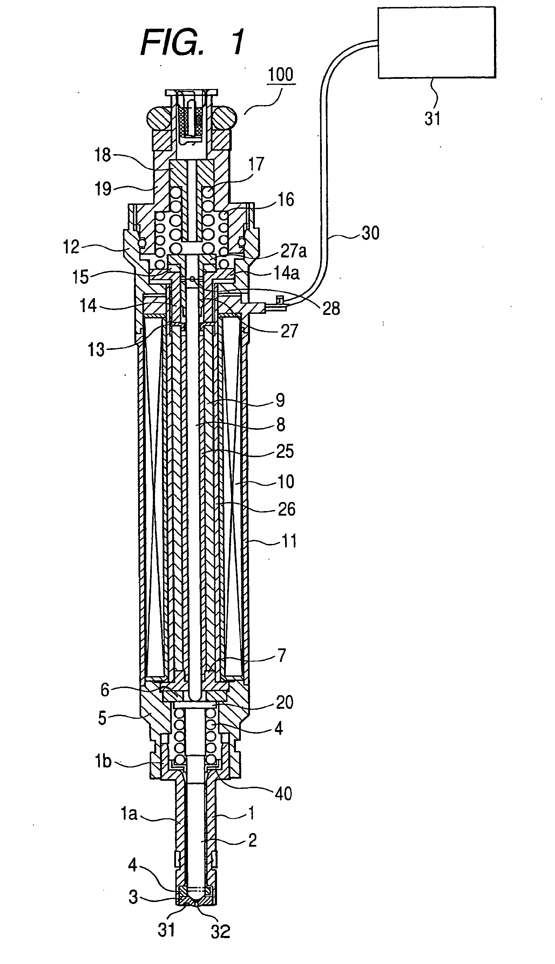

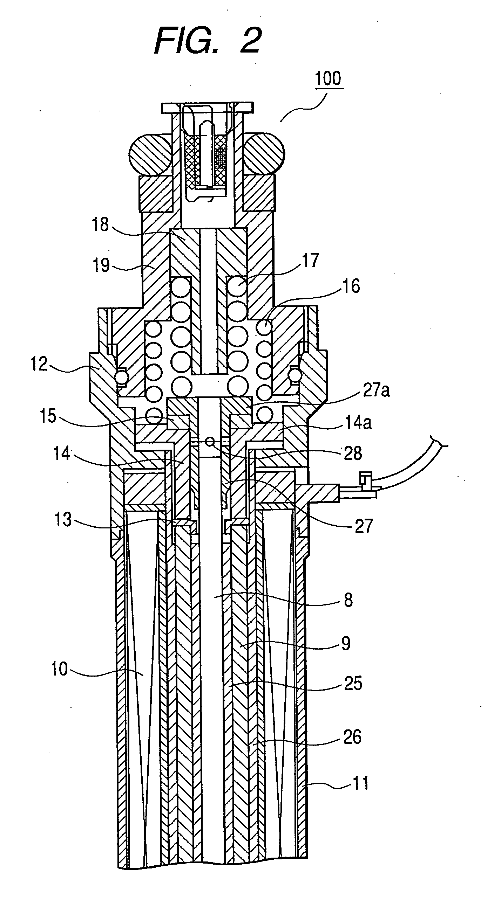

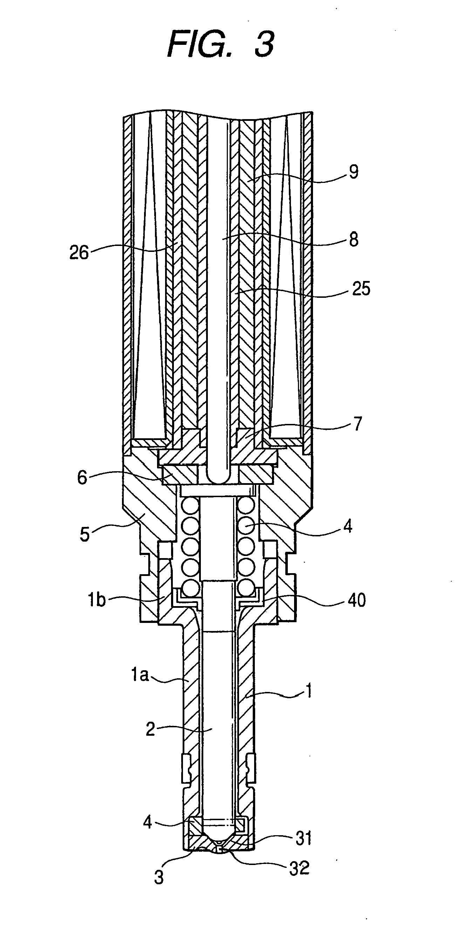

FIG. 1 is a cross sectional view of a first embodiment of a fuel injection valve 100 of the present invention. FIGs 2-3 are partial enlarged view of FIG. 1. Here, a nozzle 1-side is called as a lower side, and a core 19-side is called as an upper side.

In FIGs. 1-3, a first valve rod 2 for opening and closing a fuel injection opening (orifice) is axially slidably inserted into the nozzle 1. The nozzle 1 has a cylindrical shape. The first valve rod 2 has a rod shape. An orifice plate 3 is provided at the lower end portion of the nozzle 1. One end of the first valve rod 2 is set into a tapered hole of the orifice plate 3, the hole being upstream of the injection opening. A spring 4 is provided at the upper portion of the nozzle 1. The spring 4 always presses the first valve rod 2 upward (valve opening direction). The upper portion of the nozzle 1 is set in a housing 5 and supported by the housing 5. A stopper 6 is provided above the first valve rod 2. When the first valve rod 2 is lifted by a predetermined amount, a flange portion provided at the first valve rod 2 comes into contact with the stopper 6 to regulate a lift amount of the first valve rod 2. The stopper 6 is fixed by a base 7 attached to the upper end portion of the housing 5. The stopper 6 has a donut shape.

More specifically, around the nozzle, a body of the fuel injection valve 100 is an assembly comprising the nozzle 1, the housing 5, a first yoke 11, a second yoke 12, an upper core 19, and the like. The nozzle 1 comprises a valve guide 1a having an elongated cylindrical shape and an upper cylindrical portion 1b having a greater diameter than that of the valve guide 1a. The cylindrical portion 1b is inserted into the lower end inner circumference of the housing 5, and secured by, for example, welding.

Inside the nozzle 1 and housing 5 coupled to each other as described above, the first valve rod 2 for opening and closing a fuel injection opening 32, the spring 4, the stopper 6, and a spring bearing 40 are installed. An orifice 32 to be the fuel injection hole is provided at a center of the orifice plate 3 placed at the lower end portion of the nozzle 1. A tapered hole 31 with a valve seat is provided upstream of the orifice 32.

The first valve rod 2 is located between the orifice plate 3 and stopper 6 through the spring bearing 40. A flange 20 is provided at the upper portion of the first valve rod 2. The spring 4 is interposed between the flange 20 and spring bearing 40.

An end (lower end) of the first valve rod 2 can come into contact with and come off from the seat on the tapered hole 31 of the orifice plate 3 when the first valve rod 2 axially reciprocates. Accordingly, the nozzle can be opened and closed. The spring 4 is placed from the upper portion of the nozzle 1 to the inside of the housing 5. The spring 4 always provides the first valve rod 2 with spring force for pressing the first valve rod 2 in the upward direction in FIG. 1 (valve opening direction: away from the seat of the orifice plate 3). The upper cylindrical portion 1b of the nozzle 1 is inserted into the housing 5, and supported by the housing 5. The stopper 6 for regulating a lift amount of the first valve rod 2 is fixed by the base 7 attached to the upper end portion of the housing 5. The base 7 is secured to the upper end of the housing 5 by, for example, welding. The base 7 and stopper 6 have a donut shape. One end (lower end) of an after-mentioned second valve rod 8 is in contact with a head portion of the first valve rod 2 through the center hole portions of the base 7 and stopper 6. The hole portion of the base 7 serves as a guide hole for guiding axial movement of the second valve rod 8.

The upper portion of the housing 5 is coupled to the lower end portion of the cylindrical first yoke 11. The upper portion of the yoke 11 is coupled to the lower end portion of the second yoke 12. The second valve rod 8 is located at the center of the yoke 11. The end of the second valve rod 8 is in contact with the upper end of the first valve rod 2, and the first valve rod 2 and second valve rod 8 are disposed on the same axial line of them. A guide pipe 25 for guiding axial movement of the second valve rod 8 is placed to the outer circumference of the second valve rod 8. The guide pipe 25 is supported by the base 7. The guide pipe 25 is formed of a non-magnetic member. Outside the guide pipe 25, a cylindrical magnetostrictive element 9 such as a super magnetostirctive is disposed. Outside the magnetostrictive element 9, a cylindrical non-magnetic protection case 26 for protecting the magnetostrictive element 9 is disposed. An electromagnetic coil 10 for applying a magnetic field to the magnetostrictive element 9 is disposed outside the magnetostrictive element 9. The yoke 11 is disposed outside the coil 10.

Namely, the second valve rod 8, guide pipe 25, magnetostrictive element 9, protection pipe 26, coil 10, and yoke 11 are disposed concentrically.

The magnetostrictive element extends and contracts under the influence of an external magnetic field, and has a positive magnetostrictive characteristic of extending in proportional to the magnetic field. For example, the magnetostrictive element is formed of ferroalloy including terbium (Tb) and dysprosium (Dy), which are rare earth elements. This magnetostrictive material extends and shrinks in extremely rapid response to a variation of the external magnetic field.

A cover 13 for covering the upper end of the magnetostrictive element 9 is provided on the upper end of the magnetostrictive element 9. An element retaining member 14 for the magnetostrictive element is disposed on the cover 13. A gap ring 15 for adjusting a gap is disposed on the element pressing member 14. Namely, the element cover 13, element retaining member 14, and gap ring 15 are superimposed on the upper end of the magnetostrictive element 9. A flange portion 27a of the second valve rod 8 is located above the gap ring 15. A spring 16 for providing preload to the magnetostrictive element 9 is provided above the element retaining member 14. By providing axial preload to the magnetostrictive element, the magnetostrictive element has a characteristic showing a great magnetostrictive constant. A spring 17 is provided above the flange portion 27a of the second valve rod 8.

The upper end of the flange portion 27a receives spring force of the spring 17. By means of the spring 17, the second valve rod 8 is always pressed in the valve closing direction (downward). The springs 16, 17 are housed in the core 19 attached to the upper end portion of the yoke 12. One end of the spring 16 is supported by a step portion (spring bearing portion) formed in the core 19. The other end is supported by the upper surface of a flange portion 14a of the element retaining member 14. One end of the spring 17 is supported by an adjuster pin 18 provided to the core 19. The other end is supported by an upper end flange 14a of the second valve rod.

More specifically, an upper flange 27a of the second valve rod 8 is formed in one piece with a cylindrical body 27 secured to the upper end of the valve rod 8. The cylindrical body 27 has a fuel path in itself. Multiple fuel guide holes 28 guiding fuel to the outer circumference of the cylindrical body 27, are arranged to a wall on the path. The most part of the cylindrical body 27, other than the flange 27a, is inserted into the inner circumference of the element retaining member 14.

When no magnetic field is applied to the magnetostrictive element 9, the second valve rod 8 receives spring force of the spring 17 to press the first valve rod 2 onto the seat (initial state). In this initial state, the valve is closed. A gap (for example, about 20 to 40 µm) for keeping a stroke range (lift range) of the first valve rod 2 is ensured between the upper end flange 20 and the stopper 6. A gap (for example, about 5 µm) for absorbing axial thermal expansion of the magnetostrictive element 9 is provided between the upper flange 27a and gap ring 15. This thermal expansion absorbing gap is smaller than the gap for the lift of the valve.

An overall length of the second valve rod 8 is longer than that of the magnetostrictive element 9. This is because the material of the magnetostrictive element 9 is different from that of the second valve rod 8, and each linear expansion coefficient is different from each other. Namely, in general, a linear expansion coefficient of the magnetostrictive element 14 is greater than that of the second valve rod 8. Even in such a situation, to keep the thermal expansion absorbing gap almost constant, it is necessary that a length of the second valve rod 8 is properly made longer than that of the magnetostrictive element 9 to almost match both expansions due to the thermal expansion to each other. A ratio between the lengths of both members is determined by each thermal expansion ratio and length, and by thermal expansion ratios and lengths of the related members such as the first valve rod 2, cylindrical body 27, and element pressing member 14. For example, the magnetostrictive element 9 is made of ferroalloy containing Tb and Dy as described above, valve rods 2 and 8 is made of stainless(SUS420J). The stainless(SUS420J) has wear resistance and corrosion protection, and its linear expansion coefficient is comparatively close to that of the magnetostrictive. The length of the second valve rod 2 is 1.2 times as long as the magnetostrictive element.

In the fuel injection valve 100 structured as described above, a magnetic circuit including the housing 5, base 7, magnetostrictive element 9, element cover 13, element retaining member 14, and yokes 11, 12 is structured around the coil 10.

In the fuel injection valve 100 structured as described above, when an injection pulse is "off", and no current passes through the coil 10, a force of the spring 4 exerts upward pressure on the first valve rod, and a force of the spring 17 exerts downward pressure on the second valve rod. As the force of the spring 17 is larger than that of the spring 4, the upper surface of the flange portion of the first valve rod 2 is pressed by the second valve rod 8, and valve rod 2 keeps in contact with the valve seat in a valve closing state. In this state, a gap corresponding to the lift amount of the first valve rod 2 is provided between the first valve rod 2 and stopper 6.

When the injection pulse is "on", the current passes through the coil 10 to form a magnetic field. Then, the magnetostrictive element 9 extends upward. An amount of extension of the magnetostrictive element 9 is greater than the thermal expansion absorbing gap. Therefore, when the second valve rod extends upward, the element cover 13, element pressing member 14, and gap ring 15 are pressed upward against exertion force of the springs 16, 17. At last, the gap ring 15 lifts the second valve rod 8 upward. Accordingly, the first valve rod 2 is lifted up by force of the spring 4 until the first valve rod 2 comes in contact with the stopper 6. Then, the valve opens. The lift amount of the first valve rod 2 is regulated by the stopper 6. The lift amount of the first valve rod 2 is set smaller than a extension amount of the magnetostrictive element 9.

When the injection pulse becomes "off", no current passes through the coil 10, and the magnetostrictive element 9 returns to its original form with shrinking. By use of the spring force, the second valve rod 8 and first valve rod 2 return to the valve closed state. Then, the fuel injection is finished.

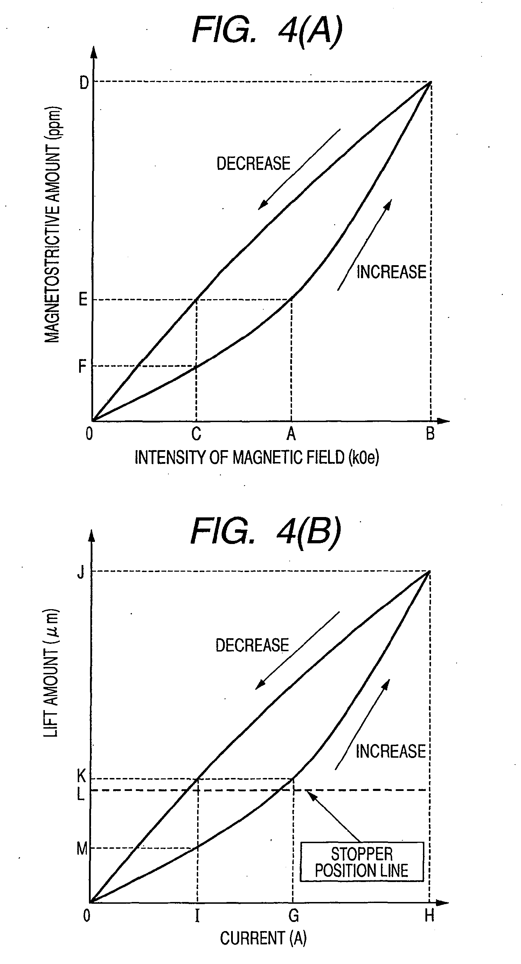

FIG. 4 shows the hysteresis characteristic of the magnetostrictive element 9 and the valve lift setting method of the stopper 6. When a magnetostriction amount of the magnetostrictive element 9 changes, the second valve rod 8 is lifted upward or downward.

In FIG. 4, the magnetostriction amount of the magnetostrictive element 9 is in proportion to a magnetic field intensity. On a magnetizing route side of a hysteresis, when the magnetic field intensity is increased from a zero point (ppm) to C (k0e), the magnetostriction amount increases from zero (ppm) to F (ppm). On the magnetizing route side of the hysteresis, when the magnetic field intensity is increased from C (k0e) to A (k0e), the magnetostriction amount increases from F (ppm) to E (ppm). When the magnetic field intensity is increased from A (k0e) to B (k0e), the magnetostriction amount increases from E (ppm) to D (ppm) as the maximum magnetostriction amount.

On the other hand, on a demagnetizing route side of the hysteresis, when the magnetic field intensity is decreased from B (k0e) of showing the maximum magnetostriction amount D to C (k0e) smaller than B(k0e), the magnetostriction amount decreases from D (ppm) to E (ppm). The magnetostriction amount E (ppm) corresponds to the magnetic field intensity A (A0e) on the magnetizing route side of the hysteresis. Therefore, even when the same magnetostriction E (ppm) is obtained, the magnetic field intensity applied on the magnetizing route side of the hysteresis is different from that on the demagnetizing route side of the hysteresis (A (k0e) on the magnetizing route side corresponds to C (k0e) on the demagnetizing route side).

Relationship between a current (A) to be applied to the coil 10 and the valve lift amount (µm) is the same as the relationship between the magnetostriction amount and the magnetic field intensity. On the magnetizing route side of the hysteresis, when a supplied current (A) is increased from zero (A) to I (A), the lift amount increases from zero (µm) to M (µm). On the magnetizing route side of the hysteresis, when the supplied current (A) is increased from I (A) to G(A), the lift amount increases from M (µm) to K (µm). When the supplied current (A) is increased from G (A) to H (A), the lift amount increases from K (µm) to J (µm) as the maximum lift amount.

On the other hand, on the demagnetizing route side of the hysteresis, when the supplied current (A) is decreased from H (A) showing the maximum lift amount J (µm) to the current I (A) smaller than the current H (A), the lift amount decreases from J (µm) as the maximum lift amount to K (µm). The lift amount K (µm) corresponds to the current G (A) on the magnetizing route side of the hysteresis. Therefore, when the same lift amount K (µm) is obtained, the supplied current (A) on the magnetizing route side of the hysteresis is different from that on the demagnetizing route side of the hysteresis (G (A) on the magnetizing route side corresponds to I (A) on the demagnetizing route side).

When the lift amount needs to be increased, the demagnetizing route side of the hysteresis of the magnetostrictive element 9 is preferably used to reduce the current (A) for obtaining the same lift amount. In the embodiment shown in FIG. 1, when the current is I (A) on the hysteresis demagnetizing route side, the lift amount of the second valve rod 8 above the first valve rod 2 is K (µm). On the other hand, the lift amount of the first valve rod 2 is L (µm), the definition line by the stopper 6, because the stopper 6 restricts the lift amount.

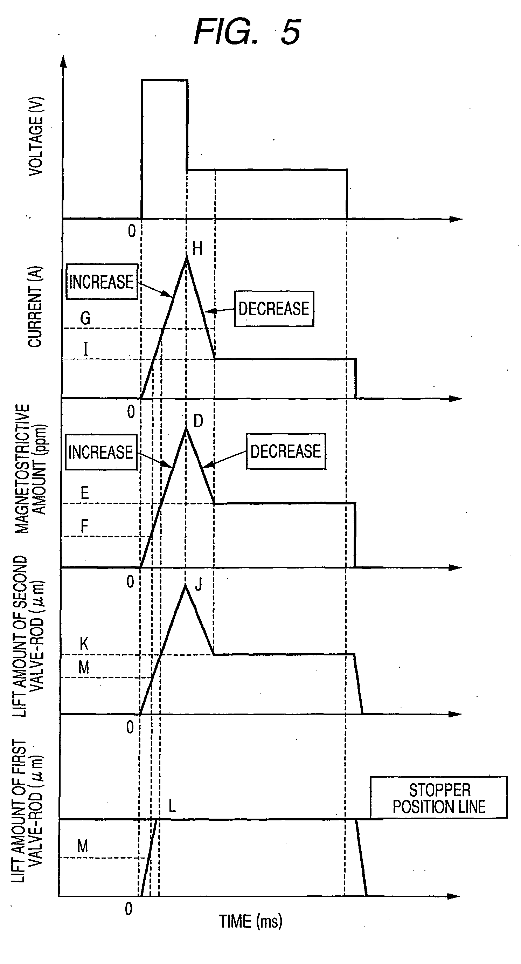

FIG. 5 is a characteristic graph of the state shown in FIG. 4. In FIG. 5, the horizontal axis shows a time (ms), and the vertical axis shows a voltage (V), a current (A), a magnetostriction amount (ppm), a lift amount of the second valve rod (µm), and a lift amount of the first valve rod (µm). Symbols in FIG. 5 correspond to the positions of the symbols shown in FIG. 4, in consideration of the magnetizing route side and demagnetizing route sides of the hysteresis.

In FIG. 5, as explained in FIG. 4, even when the same lift amount K (µm) is obtained, the supplied current on the magnetizing route side of the hysteresis is different from that on the demagnetizing route side of the hysteresis. When the lift amount needs to be increased (from M (µm) to K (µm)), the demagnetizing route side of the hysteresis is preferably used. On the demagnetizing route side of the hysteresis, when the current is I (A), the lift amount of the second valve rod 8 above the first valve rod 2 is k (µm). On the other hand, since the stopper 6 restricts (defines) the lift amount of the first valve rod 2, the lift amount is L (µm) to be the valve stroke restriction line (stopper position line) determined by the stopper 6. Therefore, variations of the magnetostriction amount of the magnetostrictive element 9 itself, and variations of positional adjustment between the second valve rod 8 and magnetostrictive element 9, can be reduced. Variation of a flow rate of the fuel injection valve 100 can be reduced. As a result, the injection amount can be controlled accurately in a wide range.

### [Embodiment 2]

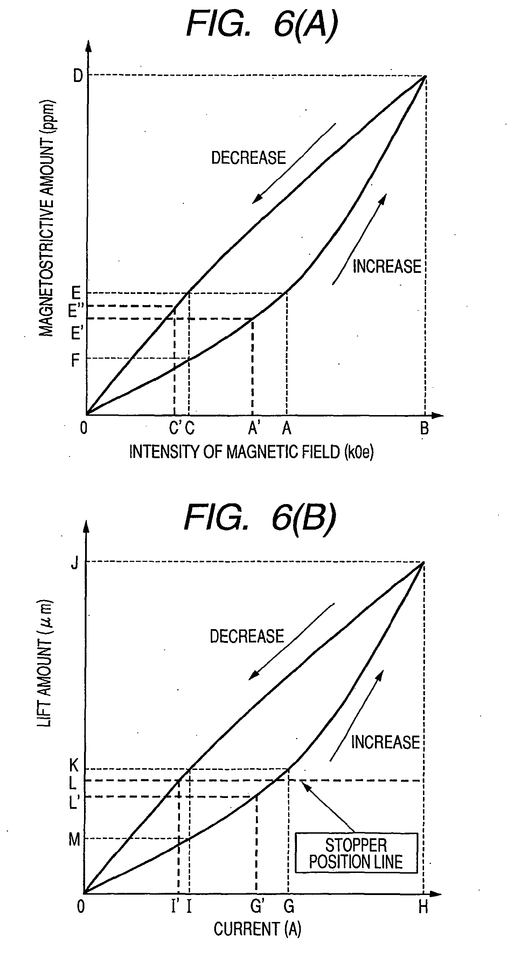

FIG. 6 shows a second embodiment of the hysteresis characteristic of the magnetostrictive element of the fuel injection valve 100 of the present invention, and of the valve stroke restriction method with the stopper.

In FIG. 6, the magnetostriction amount of the magnetostrictive element 9 is in proportion to the magnetic field intensity, as well as in FIG. 2. On the magnetizing route side of the hysteresis, when the magnetic field intensity is increased from zero (k0e) to C (k0e), the magnetostriction amount increases from zero (ppm) to F (ppm). On the magnetizing route side of the hysteresis, when the magnetic field intensity is increased from C (k0e) to A' (k0e), the magnetostriction amount increases from F (ppm) to E' (ppm). When the magnetic field intensity is increased from A' (k0e) to A (k0e), the magnetostriction amount increases from E' (ppm) to E (ppm). When the magnetic field intensity is increased from A (k0e) to B (k0e), the magnetostriction amount increases from E' (ppm) to D (ppm) as the maximum magnetostriction amount.

On the other hand, on the demagnetizing route side of the hysteresis, when the magnetic field intensity is decreased from B (k0e) showing the maximum magnetostriction amount D (ppm) to C (k0e) smaller than the magnetic field intensity B (k0e), the magnetostriction amount decreases from D (ppm) to E (ppm). The magnetostriction amount E (ppm) corresponds to the magnetic field intensity A (k0e) on the magnetizing route side of the hysteresis. Therefore, when the same magnetostrictive amount E (ppm) is obtained, the magnetic field intensity on the magnetizing route side of the hysteresis is different from that on the demagnetizing route side of the hysteresis (A (k0e) on the magnetizing route side corresponds to C (k0e) on the demagnetizing route side). When the magnetic field intensity is decreased from C (k0e) to C' (k0e) smaller than the magnetic field intensity C (k0e), the magnetostriction amount decreases from E (ppm) to E" (ppm).

Relationship between the current (A) and lift amount (µm) is the same as the relationship between the magnetostriction amount and the magnetic field intensity. Namely, on the magnetizing route side of the hysteresis, when the supplied current (A) is increased from zero (A) to I (A), the lift amount increases from zero (µm) to M (µm). On the magnetizing route side of the hysteresis, when the supplied current (A) is increased from I (A) to G' (A), the lift amount increases from M (µm) to L' (µm). On the magnetizing route side of the hysteresis, when the supplied current (A) is increased from G' (A) to G (A), the lift amount increases from L' (µm) to K (µm). When the supplied current (A) is increased from G (A) to H (A), the lift amount increases from K (µm) to J (µm).

On the other hand, on the demagnetizing route side of the hysteresis, when the supplied current (A) is decreased from H (A) showing the maximum lift amount J (µm) to I (A) smaller than H (A), the lift amount decreases from J (µm) as the maximum lift amount to K (µm). The lift amount K (µm) corresponds to the current G (A) on the magnetizing route side of the hysteresis. Therefore, even when the same lift amount K (µm) is obtained, the supplied current (A) on the magnetizing route side of the hysteresis is different from that on the demagnetizing route side of the hysteresis (G (A) on the magnetizing route side, I (A) on the demagnetizing route side). When the supplied current (A) is decreased from I (A) to I' (A), the lift amount decreases from K (µm) to L (µm).

In the embodiment shown in FIG. 1, when the current is I (A) on the demagnetizing route side of the hysteresis, the lift amount of the second valve rod 8 above the first valve rod 2 is K (µm). The lift amount of the first valve rod 2 is L (µm), which is the valve stroke restriction line (stopper position line) with the stopper 6, because the stopper 6 regulates the lift amount.

In this embodiment, the lifting action is controlled so as to be momentarily stopped at a position to just moments before reaching the lift amount L (µm) which is the valve stroke restriction line with the stopper 6, on both the magnetizing and demagnetizing route sides of the hysteresis. The positions to be momentarily stopped are the lift amount L' (µm) on the magnetizing route side and the lift K (µm) on the demagnetizing route side). On the magnetizing route side of the hysteresis, a speed of the first valve rod 2 is decreased just moments before the first valve rod 2 collides with the stopper 6 (the point of the lift amount L' (µm)), so that the bound after the first valve rod 2 collides with the stopper 6 is effectively reduced. On the demagnetizing route side of the hysteresis, a speed of the second valve rod 8 is decreased just moments before the second valve rod 8 collides with the first valve rod 2 (a point of the lift K (µm)) when the second valve rod 8 operates on the valve closing side, so that the bound after the second valve rod 8 collides with the first valve rod 2 is effectively reduced.

FIG. 7 shows a characteristic graph of the state shown in FIG. 6. In the characteristic graph, the horizontal axis shows a time (ms), and the vertical axis shows a voltage (V), current (A), magnetostriction amount (ppm), lift amount of the second valve rod (µm), and lift amount of the first valve rod (µm). The symbols in FIG. 7 correspond to the positions of the symbols shown in FIG. 6, in consideration of the magnetizing route side and demagnetizing route side of the hysteresis.

In FIG. 7, as shown in FIG. 6, the lifting action is stopped momentarily just moments before the definition line (lift amount K (µm)) of the stopper 6 on the magnetizing and demagnetizing route sides of the hysteresis. The momentarily positions are a point of the lift amount L' (µm) on the magnetizing route side of the hysteresis, and a point of the lift amount K (µm) on the demagnetizing route side of the hysteresis.

In this embodiment, the variations of the magnetostriction amount of the magnetostrictive element 9 itself and the variations of the positional adjustment between the second valve rod 8 and magnetostrictive element 9 are effectively reduced. In addition, on the magnetizing route side of the hysteresis, a speed of the first valve rod 2 is decreased just moments before the first valve rod 2 collides with the stopper 6 (a point of the lift amount L' (µm)), so that the bound after the first valve rod 2 collides with the stopper 6 is effectively reduced. The bound after the first valve rod 2 collides with the stopper 6 can be reduced, so that the variation of a flow rate of the fuel injection valve 100 can be reduced. As a result, the injection amount can be controlled accurately in the wide range.

### [Embodiment 3]

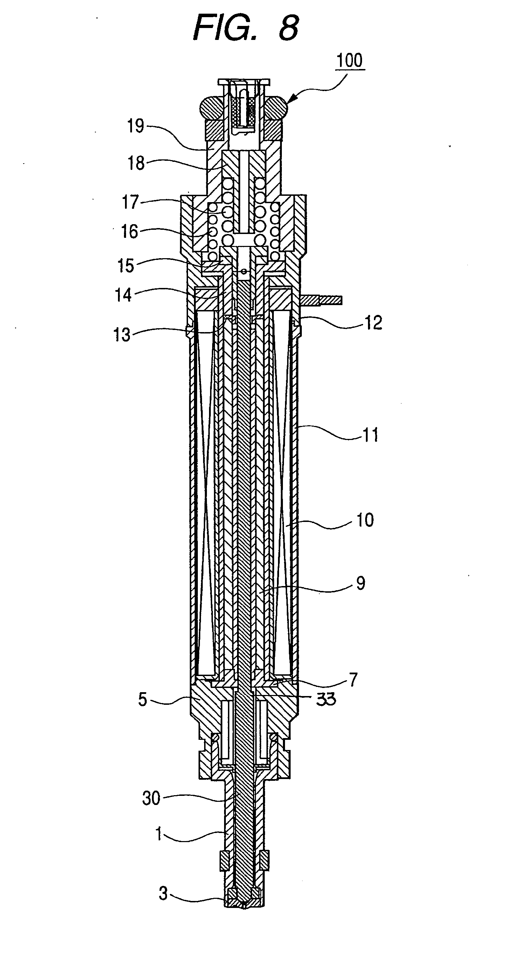

FIG. 8 shows a cross sectional view showing a third embodiment of the fuel injection valve 100 of the present invention. In FIG. 8, reference symbols same as that of FIG.1 show the same parts as parts of FIG. 1.

In FIG. 8, this embodiment is different from the embodiment shown in FIG. 1 in that the first valve rod 2 and second valve rod 8 moving to open and close the fuel injection opening of the orifice 30 shown in FIG. 1 are integrated into a single valve rod 30. The valve rod 30 is provided penetrating the yokes 12, 11 and injection nozzle 1.

In FIG. 8, the spring 4 used in FIG 1 is omitted. When the current doesn't pass through the coil 10, the valve rod 30 comes into contact with the valve seat of the orifice plate 3 by the spring 30-force exertion. When the current passes through the coil 10, the magnetostrictive element extends in an upward direction, and thereby the valve rod 30 is lifted away from the valve seat against the force of the spring 17 until a part of the rod comes into contact with the stopper. In this case, the rod 30 is provided so as to be allowed to pass through the annular base 7, a step part 33 of the rod 30 may come into contact with the base 7 as the stopper.

In the other points, this embodiment is the same as the embodiment shown in FIG. 1.

In such a structure, the bound generated from the collision between the second valve rod 8 and first valve rod 2 in the embodiment shown in FIG. 1 can be effectively reduced.

A piezo element may be used as the magnetostrictive element in the above-mentioned embodiments 1-3 in addition to the above mentioned super magnetostrictive element.

According to the present invention, an optimum fuel flow rate determined by opening and closing the an injection nozzle can be controlled accurately.

The above features and embodiments can be combined in any way partly or as a whole.

## Claims

1. Fuel injection valve comprising:
a fuel nozzle orifice (32),
a valve seat (31) provided upstream from said fuel nozzle orifice (32),
a first valve rod (2) for opening and closing said fuel nozzle orifice (32) with axial movements relative to said valve seat (31),
a spring (4) for exerting said first valve rod (2) away from said valve seat (31),
a stopper (6) for restricting a lift amount of said first valve rod (2) lifted with a force of said spring (4),
a solenoid for producing a magnetic field,
a magnetostrictive element (9) of extending when current passes through said solenoid and of shrinking when no current passes through said solenoid, and having a hysteresis in an axial deformation amount on extending and in an axial deformation amount on shrinking, and
a second valve rod (8) for pressing the first valve rod (2) onto said valve seat (31) against the force of said spring (4) when the solenoid is not energized, and for allowing the first valve rod (2) to move away from said valve seat (31) with exertions of an extension of said magnetostrictive element (9) and the force of said spring (4) when said solenoid is energized,
wherein the extension amount of said magnetostrictive element (9) when said first valve rod (2) is fully open is set greater than a full stroke of said first valve rod (2) from said valve seat (31) to said stopper (6).

2. The fuel injection valve according to claim 1, when lifting said first valve rod (2) up to said stopper (6) from said valve seat (31) and keeping it at the position of said stopper (6), both deformations of an extending route side and a shrinking route side of the hysteresis of said magnetostrictive element (9) are used, and the first valve rod (2) lift amount to be restricted with said stopper (6) is the same on both of the shrinking route side and the extending route side.

3. The fuel injection valve according to claim 1 or 2, wherein a direction of movement of said first valve rod (2) when the valve is opened is opposite to a direction of fuel injection.

4. The fuel injection valve according to at least one of claims 1 to 3, wherein a piezo element is used as said magnetostrictive element (9).

5. The fuel injection valve according to at least one of claims 1 to 4, wherein said first valve rod (2) and said second valve rod (8) are disposed on the same axial line of them, and said second valve rod (8) presses said first valve rod (2) toward said valve seat (31) by another spring when said solenoid is not energized.

6. Fuel injection valve comprising:
a fuel nozzle orifice (32),
a valve seat (31) provided upstream from said fuel nozzle orifice (32),
a valve rod for opening and closing said fuel nozzle orifice (32) with axial movements relative to said valve seat (31),
a spring (4) for exerting said valve rod toward said valve seat (31),
a stopper (6) for restricting a lift amount of said valve rod lifted,
a solenoid for producing a magnetic field, and
a magnetostrictive element (9) of extending when current passes through said solenoid and of shrinking when no current passes through said solenoid, and having a hysteresis in an axial deformation amount on extending and in an axial deformation amount on shrinking,
wherein the valve rod is allowed to move away from said valve seat (31) with exertions of an extension of said magnetostrictive element (9) against said spring (4) when said solenoid is energized,
wherein the extension amount of said magnetostrictive element (9) when said valve rod is fully open is set greater than a full stroke of said valve rod from said valve seat (31) to said stopper (6).
